# EUROPÄISCHE PATENTSCHRIFT

(11) **EP 3 784 992 B1**
(45) Veröffentlichungstag und Bekanntmachung des Hinweises auf die Patenterteilung: **10.08.2022**
(21) Anmeldenummer: 19716288.6
(22) Anmeldetag: 21.03.2019
(51) Int. Cl.: G01D 11/24, G01S 15/93, G01S 7/521, G01S 15/931

(54) **DECKELANORDNUNG FÜR EINEN SENSOR SOWIE FUSSGÄNGERSCHUTZSENSOR FÜR EIN FAHRZEUG**
COVER ASSEMBLY FOR A SENSOR, AND PEDESTRIAN PROTECTION SENSOR FOR A VEHICLE
ENSEMBLE À COUVERCLE POUR UN CAPTEUR AINSI QUE CAPTEUR DE PROTECTION DES PIÉTONS POUR UN VÉHICULE

(30) Priorität: 23.04.2018 DE 102018206210
(43) Veröffentlichungstag der Anmeldung: 03.03.2021
(73) Patentinhaber: Continental Automotive Technologies GmbH, 30165 Hannover (DE)
(72) Erfinder: HARTMANN, Rico, 90411 Nürnberg (DE)
(74) Vertreter: Continental Corporation
(86) Internationale Anmeldenummer: PCT/DE2019/200023
(87) Internationale Veröffentlichungsnummer: WO 2019/206382

(56) Entgegenhaltungen:
- WO-A1-2016/087256
- DE-A1-102013 208 537
- DE-A1-102015 107 123
- DE-U1-202014 103 822

## Beschreibung

Die Erfindung betrifft eine Deckelanordnung für einen Sensor mit den Merkmalen des Oberbegriffs des Anspruchs 1. Die Erfindung betrifft des Weiteren einen Fußgängerschutzsensor als den Sensor.

Neben der Grundfunktion eines Sensors, nämlich die Aufnahme von Messgrößen und Übergabe als Sensordaten, müssen moderne Sensoren Nebenbedingungen erfüllen, die insbesondere in der robusten Ausgestaltung der Sensoren liegen, damit diese über lange Zeiträume fehlerfrei eingesetzt werden können. Besondere Aufmerksamkeit müssen dabei Sensoren für Fahrzeuge erfahren, da diese auch bei widrigen Witterungsbedingungen langjährig eingesetzt werden. Neben der robusten Ausgestaltung tritt der Wunsch nach einer kostengünstigen Fertigung ebenso in den Vordergrund, um im internationalen Wettbewerb nicht nur funktionssichere und robuste Sensoren, sondern auch kostengünstige Sensoren anbieten zu können.

Die Druckschrift DE 10 2015 113 192 A1, die wohl den nächstkommenden Stand der Technik bildet, offenbart eine Ultraschallsensorvorrichtung für ein Kraftfahrzeug mit einem Ultraschallsensor, wobei die Ultraschallsensorvorrichtung eine Abdeckeinrichtung zum Schutz von Abschnitten des Ultraschallsensors aufweist. Die Abdeckeinrichtung ist als eine Kappe realisiert, welche über Rastmittel verrastet werden kann und welche in eine Demontagerichtung über Laschen in einem Deckelbereich vorgespannt ist, so dass die Abdeckeinrichtung in Demontagerichtung an eine Grundgehäuse fest anliegt.

Die DE 10 2013 208 537 A1 beschreibt eine Drucksensoranordnung mit einem Sensorgehäuse, das einen Druckanschluss aufweist und in einer Sensorkammer einen Drucksensor aufnimmt. Das Sensorgehäuse ist aus einem ersten Gehäuseteil und einem zweiten Gehäuseteil gebildet, wobei die Sensorkammer von den beiden Gehäuseteilen gemeinsam ausgebildet ist. Das erste Gehäuseteil und das zweite Gehäuseteil sind formschlüssig mittels einer Hintergriffsverbindung miteinander verbunden. Hierfür weist das erste Gehäuseteil eine Rastnase auf, während das zweite Gehäuseteil eine mit der Rastnase zusammenwirkende Rastausnehmung aufweist, in welche die Rastnase rastend eingreift, wenn die beiden Gehäuseteile aneinander montiert werden.

Die WO 2016/087256 A1 beschreibt eine Sensoranordnung mit einem Drucksensor und mit einem aus einem Kunststoffspritzgussteil gebildeten Gehäuse. Das Gehäuse ist aus zwei Gehäuseteilen aufgebaut, einem rohrförmigen Gehäuseteil und einem dieses an einem Ende abschließenden, stopfenförmig ausgebildeten Deckel, wobei innerhalb des Gehäuses der Drucksensor und eine Sensorelektronik angeordnet sind. Der Deckel weist in Richtung des rohrförmigen Gehäuseteils verlaufende Rastzungen auf, welche bei der Montage der beiden Gehäuseteile hinter Vorsprüngen an der Außenseite des rohrförmigen Gehäuseteils verrasten, wodurch die beiden Gehäuseteile miteinander verbunden sind.

Die DE 10 2015 107 123 A1 offenbart einen Ultraschallsensor für ein Kraftfahrzeug mit einer Membran zum Aussenden eines Ultraschallsignals und mit einem Sensorgehäuse, wobei die Membran mittels einer Befestigungseinrichtung, welche mit dem Sensorgehäuse formschlüssig verbunden ist, in einer Montageposition gehalten ist. Zur Realisierung der formschlüssigen Verbindung ist an der Befestigungseinrichtung ein als Rastnase ausgebildetes Rastelement angeordnet und an einer Innenseite des Sensorgehäuses ist eine zu dem Rastelement korrespondierende Ausnehmung vorgesehen, wobei das Rastelement mit dem Aufnahmeelement formschlüssig verbunden ist.

Die DE 20 2014 103 822 U1 beschreibt eine Sensoranordnung mit einem hohlzylinderförmigen Sensorgehäuse und mit einer Verschlusskappe, wobei die Verschlusskappe einen hohlzylinderförmigen Grundkörper mit einem offenen Ende und einem geschlossenen Ende sowie eine außen um den Grundkörper umlaufende und zu dem offenen Ende hin abgewinkelte Dichtlippe aufweist, und wobei an dem offenen Ende mehrere Schnapphaken ausgebildet sind. Das Sensorgehäuse weist in seinem Innenraum einen um den Innenraum umlaufenden Vorsprung auf, der eingerichtet ist, um bei der Montage des Sensorgehäuses mit der Verschlusskappe mit den Schnapphaken der Verschlusskappe zu verrasten. Zudem weist das Sensorgehäuse an dem der Verschlusskappe zugewandten Ende eine Abschrägung auf, so dass, wenn die Schnapphaken der Verschlusskappe mit dem Vorsprung des Sensorgehäuses verrastet sind, die Dichtlippe der Verschlusskappe so deformiert wird, dass der Winkel der Dichtlippe der Verschlusskappe zur Längsachse der Verschlusskappe dem Winkel der Abschrägung des Sensorgehäuses zur Längsachse des Sensorgehäuses entspricht. Hierdurch soll eine formschlüssige Verbindung zwischen der Dichtlippe und der Abschrägung des Sensorgehäuses geschaffen werden, bei der die Abdichtung über den gesamten Bereich der formschlüssigen Verbindung erfolgen und so Verunreinigungen ein besonders großer Abdichtbereich entgegengestellt werden soll.

Der Erfindung liegt die Aufgabe zugrunde, eine Deckelanordnung für einen Sensor vorzuschlagen, welche funktionssicher ausgebildet ist und einen vereinfachten Aufbau aufweist. Es ist auch Aufgabe der Erfindung, einen Fußgängerschutzsensor mit der Deckelanordnung vorzuschlagen.

Diese Aufgabe wird durch eine Deckelanordnung mit den Merkmalen des Anspruchs 1 sowie durch einen Fußgängerschutzsensor mit den Merkmalen des Anspruchs 10 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Deckelanordnung, welche für eine Sensorkomponente ausgebildet ist. Insbesondere dient die Deckelanordnung dazu, die Sensorkomponente zum Beispiel vor Umwelteinflüssen oder Fremdkörpern zu schützen. Vorzugsweise wird durch die Deckelanordnung ein Innenraum als Schutzvolumen definiert und geschützt, wobei die Sensorkomponente in dem Schutzvolumen angeordnet ist.

Die Deckelanordnung weist einen Sensorgehäuseabschnitt auf. Der Sensorgehäuseabschnitt kann als ein separater Abschnitt zu einem Sensorgehäuse ausgebildet sein, welcher mit dem Sensorgehäuse verbunden ist. Bevorzugt ist der Sensorgehäuseabschnitt ein integraler Abschnitt des Sensorgehäuses und ist beispielsweise mit dem Sensorgehäuse gemeinsam urformend hergestellt. Beispielsweise ist der Sensorgehäuseabschnitt und/oder das Sensorgehäuse als ein insbesondere einteiliges oder mehrteiliges Kunststoffspritzgussteil ausgebildet.

Die Deckelanordnung weist einen Deckel auf, wobei der Deckel mit dem Sensorgehäuseabschnitt verbunden ist. Insbesondere wird der Deckel in einer Montagerichtung auf oder in dem Sensorgehäuseabschnitt aufgesteckt und/oder in einer Demontagerichtung von dem Sensorgehäuseabschnitt entfernt. Zwischen dem Deckel und dem Sensorgehäuseabschnitt ist der Innenraum und/oder das Schutzvolumen angeordnet.

Zur Befestigung weist der Sensorgehäuseabschnitt mindestens einen Nasenabschnitt, vorzugsweise genau zwei derartige Nasenabschnitte, auf, wobei der Nasenabschnitt eine Rampenfläche aufweist. Die Rampenfläche weist eine Steigung auf, wobei die Steigung in Montagerichtung zunehmend ausgebildet ist. Insbesondere ist die Rampenfläche so ausgebildet, dass ein breiterer Abschnitt in Montagerichtung weiter in dem Sensorgehäuseabschnitt und ein schmaler Abschnitt in Montagerichtung weniger weit in dem Sensorgehäuseabschnitt angeordnet ist.

Der Deckel weist eine Nasenaufnahme auf, wobei in einem montierten Zustand des Deckels der Nasenabschnitt in der Nasenaufnahme angeordnet ist.

Zudem weist der Deckel mindestens eine Spannlasche auf, wobei die Spannlasche den Deckel in der Demontagerichtung vorspannt, so dass der Deckel in die Demontagerichtung gedrückt ist. Die Nasenaufnahme liegt an dem Nasenabschnitt in der Demontagerichtung formschlüssig an, so dass trotz der Vorspannung der Deckel auf dem Sensorgehäuseabschnitt verbleibt. Insbesondere ist der Deckel über die Nasenaufnahme und/oder den Nasenabschnitt mit dem Sensorgehäuseabschnitt verrastet. Dadurch, dass die Spannlasche den Deckel in Demontagerichtung vorspannt, wird erreicht, dass die Nasenaufnahme stets an dem Nasenabschnitt anliegt, so dass ein Klappern des Deckels in bzw. an dem Sensorgehäuseabschnitt vermieden ist.

Im Rahmen der Erfindung wird vorgeschlagen, dass die Spannlasche auf dieser Rampenfläche des Nasenabschnitts aufliegt. Damit wird der Funktionseinheit Nasenaufnahme - Nasenabschnitt neben der Funktion als Rasteinrichtung eine Funktion als Spanneinrichtung zugeteilt. Die zwei unterschiedlichen Funktionen bei der Sicherung des Deckels in oder an dem Sensorgehäuseabschnitt, nämlich Rasten und Vorspannen, werden in der Funktionseinheit vereinigt. Damit ist die Deckelanordnung aufgrund der umgesetzten Funktionen "Rasten und Vorspannen" funktionssicher aufgebaut, kann jedoch aufgrund der Zusammenfassung der beiden Funktionen vereinfacht konstruiert werden.

Bei einer bevorzugten Ausgestaltung der Erfindung ist die Spannlasche in der Nasenaufnahme angeordnet. Beispielsweise ist die Nasenaufnahme als ein U-förmiger Abschnitt ausgebildet, wobei der Querschenkel an dem Nasenabschnitt formschlüssig anliegt und die Spannlasche zwischen den beiden stehenden Schenkeln angeordnet ist. Insbesondere können die Spannlasche und die beiden stehenden Schenkel an einem gemeinsamen Verbindungsabschnitt befestigt oder einstückig ausgebildet sein. Diese Ausgestaltung unterstreicht den vereinfachten und zudem kompakten Aufbau der Deckelanordnung.

Bei einer bevorzugten Weiterbildung der Erfindung weist der Sensorgehäuseabschnitt eine Anlagefläche zur Anlage der Nasenaufnahme in einer Richtung senkrecht zu der Montage- und/oder zu der Demontagerichtung auf. Der Deckel legt sich bei oder nach der Montage mit der oder den Nasenaufnahmen an die Anlagefläche(n) an. Vorzugsweise weist der Deckel zwei Nasenaufnahmen und der Sensorgehäuseabschnitt zwei Anlageflächen auf, wobei die Anlageflächen die Nasenaufnahmen klammerartig umgreifen. Es ist bevorzugt vorgesehen, dass der Nasenabschnitt aus der Anlagefläche auskragt. Der Nasenabschnitt bildet insbesondere eine Erhebung zu der Anlagefläche. Die Nasenaufnahme kann sich in Bereichen, welche außerhalb von dem Nasenabschnitt angeordnet sind, an die Anlagefläche anlehnen.

Bei einer bevorzugten Weiterbildung der Erfindung ist die Nasenaufnahme in Richtung der Anlagefläche vorgespannt, so dass die Nasenaufnahme gegen die Anlagefläche gepresst ist. Insbesondere wenn der Nasenabschnitt einen Teil der Anlagefläche bildet, wird dadurch erreicht, dass die formschlüssige Verbindung zwischen Nasenaufnahme und Nasenabschnitt nicht versehentlich geöffnet werden kann.

Bevorzugt weist der Nasenabschnitt eine Rastfläche und die Nasenaufnahme eine Gegenrastfläche auf. Insbesondere ist die Gegenrastfläche an dem liegenden Schenkel oder Querschenkel des U's der Nasenaufnahme angeordnet. Die Rastfläche ist so ausgebildet, dass die Nasenaufnahme von der Rastfläche in Richtung der Anlagefläche geführt wird. Beispielsweise weisen Rastfläche und Anlagefläche einen Zwischenwinkel auf, welcher kleiner als 90° ausgebildet ist. Vorzugsweise ist die Rastfläche in einem Längsschnitt senkrecht zur Anlagefläche und in Montagerichtung bzw. Demontagerichtung zu der Anlagefläche hin monoton abfallend oder sogar streng monoton abfallend ausgebildet. Die Rastfläche bildet eine Rampe oder eine Rutsche für die Nasenaufnahme, so dass diese selbsttätig in Richtung Anlagefläche geführt ist. In dieser Ausgestaltung ist der Deckel selbstsichernd an dem Sensorgehäuseabschnitt angeordnet.

Bei einer bevorzugten Weiterbildung der Erfindung weist der Deckel ein Abstandselement auf, welches einen mechanischen Endanschlag für den Deckel bei der Montage in dem Sensorgehäuseabschnitt bildet. Auf diese Weise bleibt von dem Innenraum stets ein Minimalvolumen, insbesondere ein geschütztes Minimalvolumen, unter dem Deckel, so dass zu schützende Komponenten in dem Innenraum, insbesondere die Sensorkomponente, bei der Montage nicht beschädigt werden können.

Bei einer bevorzugten konstruktiven Ausgestaltung ist der Deckel in seitlicher Draufsicht U-förmig ausgebildet. Dieser weist zwei Seitenabschnitte und einen Verbindungsabschnitt auf, welcher die beiden Seitenabschnitte verbindet. Die zwei Seitenabschnitte bilden jeweils eine Nasenaufnahme aus, wie diese zuvor beschrieben wurde. Nach einem Einführen des Deckels in den Sensorgehäuseabschnitt werden die Seitenabschnitte zueinander elastisch verschwenkt, bis die Nasenabschnitte in die Nasenaufnahmen eingeführt sind. Nachfolgend schwenken die Seitenabschnitte wieder nach außen und legen sich an die Anlagefläche des Sensorgehäuseabschnitts an.

Vorzugsweise ist das Abstandselement an dem Verbindungsabschnitt ausgebildet. In einer konkreten Ausgestaltung ist das Abstandselement als mindestens eine seitliche Leiste an dem Verbindungsabschnitt ausgebildet. Vorzugsweise ist eine derartige Leiste auf beiden Seiten des Verbindungsabschnitts realisiert, so dass das geschützte Minimalvolumen zwischen dem Sensorgehäuseabschnitt, dem Verbindungsabschnitt und seitlich zwischen den Abstandselementen gebildet ist.

Bei einer bevorzugten Realisierung der Erfindung ist der Deckel als ein Blechformteil ausgebildet. In dieser Ausgestaltung können die Nasenaufnahmen durch Ausstanzen eines Innenabschnitts aus einem Blechhalbzeug umgesetzt werden. Die Spannlasche kann aus dem Material innerhalb der Nasenaufnahme dargestellt werden.

Ein weiterer Gegenstand der Erfindung betrifft einen Fußgängerschutzsensor für ein Fahrzeug, welcher eine Deckelanordnung aufweist, wie diese zuvor beschrieben wurde bzw. nach einem der vorhergehenden Ansprüche.

Der Fußgängerschutzsensor weist eine Schnittstelle für einen Meßschlauch auf, wobei ein Sensorraum als Druckmeßraum des Fußgängerschutzsensors mit dem Schlauchraum strömungstechnisch verbunden oder zumindest gekoppelt ist, so dass bei einer Deformation des Meßschlauches eine Druckänderung in dem Sensorraum erfolgt. Der Fußgängerschutzsensor weist einen Sensor auf, der die Druckänderung erfasst.

Der Sensorraum ist in einem Sensorgehäuse angeordnet, wobei der Sensorgehäuseabschnitt einen Teil des Sensorgehäuses bildet oder mit diesem verbunden ist. Der Sensor weist eine Membraneinrichtung als Sensorkomponente auf. Der Sensorraum ist durch die Membraneinrichtung gegenüber einer Umgebung druckdicht abgeschlossen, so dass bei einer Druckänderung in dem Sensorraum, insbesondere bei einer Deformation des Meßschlauches, die Membraneinrichtung ausgelenkt wird. Der Sensor ist des Weiteren ausgebildet, die Auslenkung der Membraneinrichtung messtechnisch zu erfassen.

Die Membraneinrichtung ist bei einer bevorzugten Ausgestaltung in dem Sensorgehäuseabschnitt angeordnet und durch den Deckel abgedeckt. Insbesondere ist die Membraneinrichtung in dem Innenraum oder Schutzvolumen angeordnet, welcher durch den Deckel und den Sensorgehäuseabschnitt gebildet ist. Besonders bevorzugt beschränkt sich der Bauraum der Membraneinrichtung auf das geschützte Minimalvolumen, welches durch das mindestens eine Abstandselement sichergestellt ist.

Weitere Merkmale, Vorteile und Wirkungen der Erfindung ergeben sich aus der nachfolgenden Beschreibung bevorzugter Ausführungsbeispiele der Erfindung. Dabei zeigen:
Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine Explosionsdarstellung eines Fußgängerschutzsensor als ein Ausführungsbeispiel der Erfindung;
- Figur 2: eine Schnittdarstellung von dem Fußgängerschutzsensor in der Figur 1;
- Figur 3: ein Detail aus der Schnittdarstellung von dem Fußgängerschutzsensor der vorhergehenden Figur beim Einsetzen eines Deckels;
- Figur 4 a, b: der Deckel der vorhergehenden Figur in einer 3-dimensionalen Darstellung in verschiedenen Ansichten.

Einander entsprechende oder gleiche Teile sind in den Figuren jeweils mit den gleichen Bezugszeichen versehen.

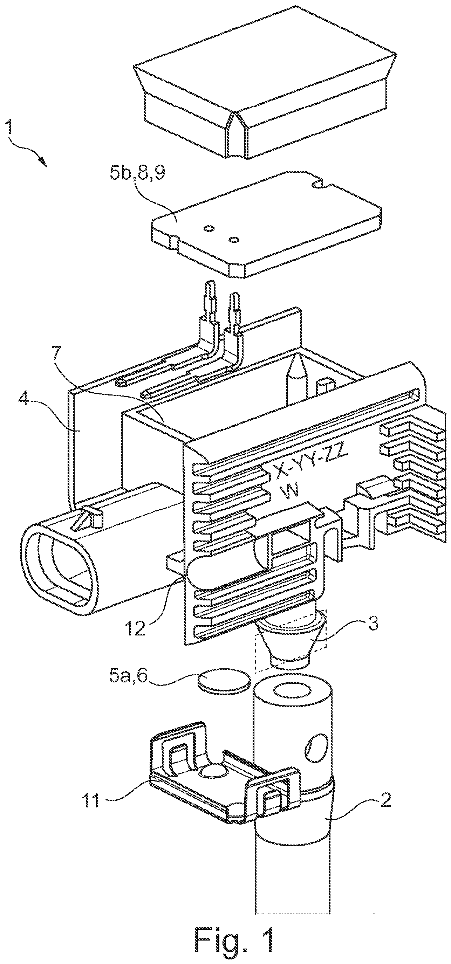

Die Figur 1 zeigt in einer schematischen, 3-dimensionalen Explosionsdarstellung einen Fußgängerschutzsensor 1 als ein Ausführungsbeispiel der Erfindung. Der Fußgängerschutzsensor 1 ist mit einem Meßschlauch 2 strömungstechnisch verbunden, welcher bei einem Fahrzeug beispielsweise in einem Frontabschnitt angeordnet ist. Bei einer Kollision mit einem Fußgänger wird der Meßschlauch 2 deformiert, so dass in dem Meßschlauch 2 und damit im dem Fußgängerschutzsensor 1 kurzzeitig eine Druckerhöhung erfolgt, die als Messung einer Fußgängerkollision interpretiert werden kann. Auf Basis der erfassten Druckerhöhung bzw. Fußgängerkollision können rettende Maßnahmen, wie zum Beispiel ein Aufstellen einer Motorhaube etc. eingeleitet werden.

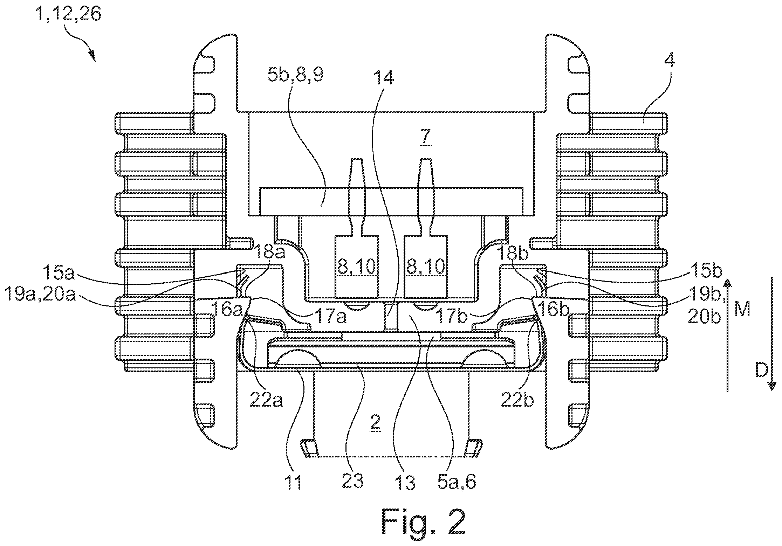

Der Fußgängerschutzsensor 1 weist eine Schnittstelle 3 zur strömungstechnischen Kopplung mit dem Meßschlauch 2 auf. Der Fußgängerschutzsensor 1 weist ein Sensorgehäuse 4 auf, in dem Sensorkomponenten 5 a, b angeordnet sind. So ist eine Membraneinrichtung 6 als Sensorkomponente 5 a vorgesehen, welche einen Sensorraum 7 in dem Sensorgehäuse 4 gegenüber einer Umgebung luftdicht abschließt. Bei der besagten Druckerhöhung wird die Membraneinrichtung 6 ausgelenkt und/oder deformiert. Ferner ist ein Sensoreinsatz 8 als Sensorkomponente 5b eingesetzt, welcher eine Leiterplatte 9 und Sensoren 10 (Figur 2) umfasst, wobei die Sensoren 10 ausgebildet sind, die Auslenkung oder Deformation der Membraneinrichtung 6 messtechnisch zu erfassen und zum Beispiel an eine Auswerteeinheit weiterzuleiten.

In einem unteren Bereich der Darstellung ist ein Deckel 11 gezeigt, welcher in einen Sensorgehäuseabschnitt 12 eingesetzt und verliersicher verrastet werden kann. Deckel 11 und Sensorgehäuseabschnitt 12 bilden zusammen eine Deckelanordnung 26.

Die Figur 2 zeigt einen Längsschnitt des Fußgängerschutzsensors 1 in einer Detaildarstellung im Bereich des Sensorgehäuseabschnitts 12. Es ist zu erkennen, dass der Sensorgehäuseabschnitt 12 einen Teil des Sensorgehäuses 4 bildet. Der Sensorgehäuseabschnitt 12 weist einen Bodenbereich 13 auf, welcher den Sensorraum 7 in dem Sensorgehäuse 4 gegenüber einer Umgebung abtrennt. In dem Bodenbereich 13 ist eine Durchgangsöffnung 14 eingebracht, welche jedoch durch die Membraneinrichtung 6 strömungstechnisch abgedichtet ist. Die Membraneinrichtung 6 ist als ein Plattenelement, in diesem Fall kreisförmiges Plattenelement ausgebildet und auf den Bodenbereich 14 aufgeschweißt. Die Sensoren 10 sind auf der abgewandten Seite des Bodenbereichs 13 angeordnet.

Die außenliegende Membraneinrichtung 6 stellt eine empfindliche Sensorkomponente 5a dar, welche zwar mit der Umgebung strömungstechnisch kommunizieren muss, jedoch gegen Fremdeinwirkung oder Fremdkörper geschützt werden muss. Der Sensorgehäuseabschnitt 12 bildet eine Aufnahme für den Deckel 11, wobei der Deckel 11 in einer Montagerichtung M in den Sensorgehäuseabschnitt 12 eingesetzt werden kann und in einer Demontagerichtung D aus dem Sensorgehäuseabschnitt 12 herausgenommen werden kann.

Der Sensorgehäuseabschnitt 12 weist auf zwei gegenüberliegenden Seiten Anlageflächen 15 a, b für den Deckel 11 auf. Die Anlageflächen 15 a, b sind parallel zueinander orientiert.

Aus den Anlageflächen 15 a, b kragen Nasenabschnitte 16 a, b aus, welche in dem gezeigten Längsschnitt eine dreieckige Form aufweisen. Die Nasenabschnitte 16 a, b verjüngen oder verkleinern den freien Durchmesser zwischen den Anlageflächen 15 a, b. Die Nasenabschnitte 16 a, b weisen jeweils eine Rampenfläche 17 a, b und eine Rastfläche 18 a, b auf. Die Rampenflächen 17 a, b sind zueinander orientiert und sind in dem gezeigten Längsschnitt konvergierend in Montagerichtung M ausgerichtet. Die Rastflächen 18 a, b nehmen in dem gezeigten Längsschnitt gegenüber der Montagerichtung M oder der Demontagerichtung D einen Winkel ein, welcher kleiner als 90° ist, wobei die Rastflächen 18 a, b gegenüber den Anlageflächen 15 a, b einen freien Zwischenwinkel von kleiner als 90° einnehmen.

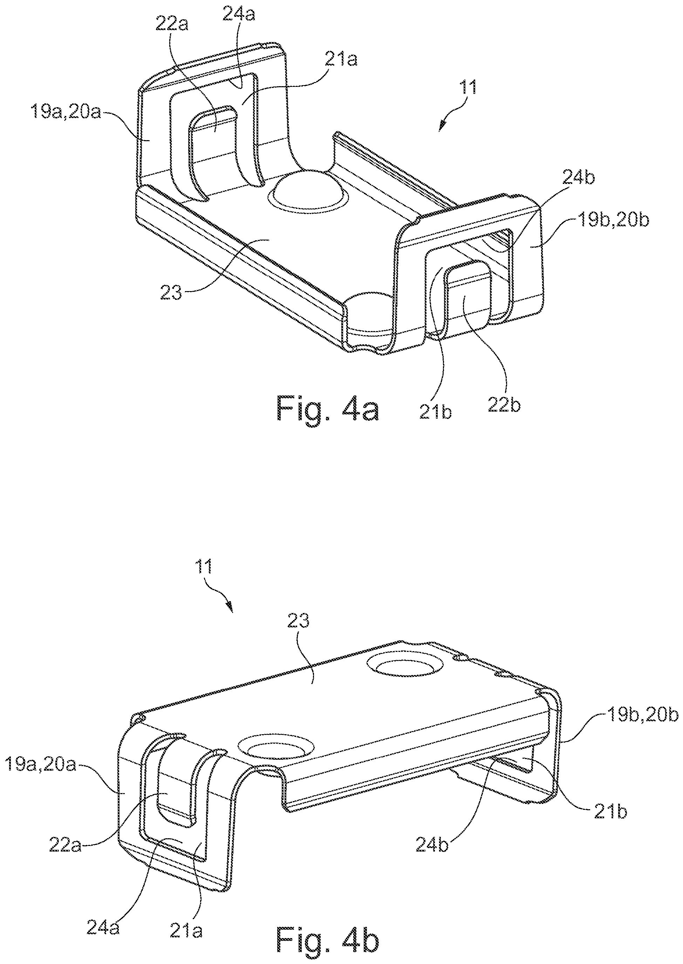

Wie sich insbesondere aus den Figuren 4 a, b ergibt, die den Deckel 11 in einer dreidimensionalen Darstellung zeigen, weist der Deckel 11 Nasenaufnahmen 19 a, b auf, welche als U-förmige Bereiche von Seitenabschnitten 20 a, b des Deckels 11 ausgebildet sind. Insbesondere weisen die Nasenaufnahmen 19 a, b einen umschlossenen Fensterbereich 21 a, b auf, welcher zur Aufnahme der Nasenabschnitte 16 a, b dient. Gleichgerichtet oder parallel zu den Nasenaufnahmen 19 a, b weist der Deckel zwei Spannlaschen 22 a, b auf, welche in den Nasenaufnahmen 19 a, b angeordnet sind. Insbesondere sind die Nasenaufnahmen 19 a, b in der gleichen Bauteilebene wie die Spannlaschen 22 a, b angeordnet.

Die Seitenabschnitte 20 a, b werden über einen Verbindungsabschnitt 23 miteinander verbunden, wobei der Verbindungsabschnitt 23 einen Deckelbereich für den Deckel 11 bildet. An den Längsseiten weist der Verbindungsabschnitt 23 einen abgekanteten Bereich 25 a, b auf, welcher den Verbindungsabschnitt 23 konstruktiv verstärkt.

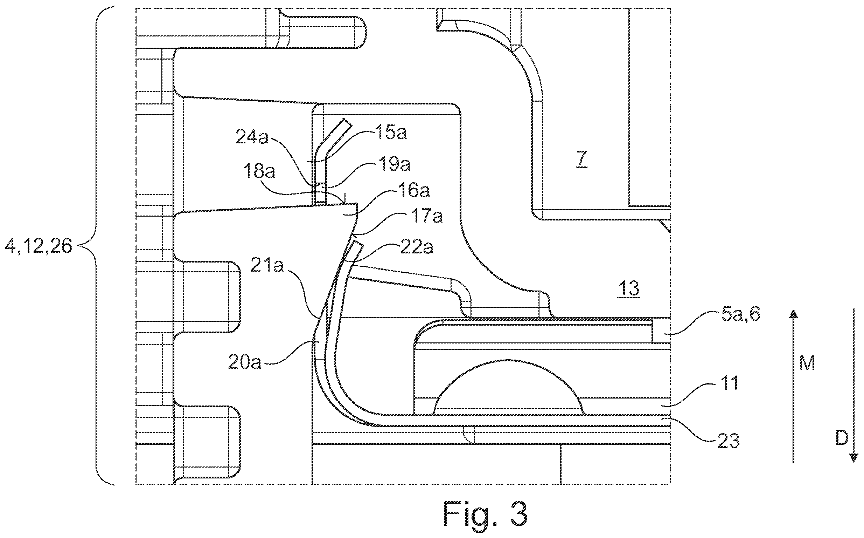

Die Figur 3 zeigt ein Detailausschnitt bei der Montage des Deckels 11 in dem Sensorgehäuseabschnitt 12. Bei der Montage wird der Deckel 11 in Montagerichtung M in den Sensorgehäuseabschnitt 12 eingedrückt, wobei die Seitenabschnitte 20 a, b an den Anlageflächen 15 a, b gleitend anliegen. Bei einem Einschieben des Deckels 11 werden die Nasenaufnahmen 19 a, b durch die Nasenabschnitte 16 a, b ausgelenkt, bis die Nasenaufnahmen 19 a, b die Nasenabschnitte 16 a, b aufnehmen, wie dies in der Figur 3 gezeigt ist. In diesem Montagezustand schnappen die Nasenaufnahmen 19 a, b und/oder die Seitenabschnitte 20 a, b gegen die Anlageflächen 15 a, b, so dass die Nasenabschnitte 16 a, b in den Nasenaufnahmen 19 a, b formschlüssig gefangen sind.

Der Deckel 11 kann nicht beliebig weit in den Sensorgehäuseabschnitt 12 eingeschoben werden, da die abgekanteten Bereiche 25 a, b als Abstandselemente wirken und sich an dem Bodenbereich 13 des Sensorgehäuseabschnitts 12 abstützen. Dadurch verbleibt unter dem Deckel 11 ein Minimalvolumen, so dass die Membraneinrichtung 6 bei der Montage vor einer Beschädigung geschützt ist. Auch bei einer späteren Stoßbeaufschlagung des Deckels 11 bilden die abgekanteten Bereiche 25 a, b Abstandselemente als Schutz für die Membraneinrichtung 6.

Die Spannlaschen 22 a, b liegen an den Rampenflächen 17 a, b an und werden durch die Rampenfläche 17 a, b zueinander ausgelenkt. Durch die elastische Verformung der Spannlaschen 22 a, b ist der Deckel 11 in Demontagerichtung D vorgespannt, so dass der Deckel 11 selbsttätig in Demontagerichtung D verfährt. Ein Ausfahren des Deckels 11 wird jedoch dadurch verhindert, dass an dem Querschenkel der Nasenaufnahmen 19 a, b jeweils eine Gegenrastfläche 24 a, b ausgebildet ist, welche - wie sich aus der Figur 2 entnehmen lässt - formschlüssig an den Rastflächen 18 a, b anliegen und einen mechanischen Endanschlag für den Deckel 11 in Demontagerichtung D bilden. Durch die im Längsschnitt schräge Ausbildung der Rastflächen 18 a, b werden die Nasenaufnahmen 19 a, b zudem an die Anlageflächen 15 a, b gedrückt. Ergänzend ist es bevorzugt, dass der Deckel 11 in Querrichtung zu der Montagerichtung M und/oder Demontagerichtung D vorgespannt in den Sensorgehäuseabschnitt 12 eingeführt wird.

Der Vorteil dieser konstruktiven Ausgestaltung liegt darin, dass der Deckel 11 bei der Montage die Membraneinrichtung 6 nicht verletzen kann. Ferner wird der Deckel 11 formschlüssig gehalten und in Demontagerichtung D vorgespannt, wobei die formschlüssige Verbindung und die Vorspannung über das Zusammenwirken von Nasenabschnitt 16 a, b und Seitenabschnitt 20 a, b umgesetzt wird.

Der Deckel 11 kann kostengünstig als Blechteil oder Blechformteil ausgebildet sein und beispielsweise aus Edelstahl hergestellt werden. In dieser Ausgestaltung kann dieser durch einen einfachen Stanz- und Biegeprozess hergestellt werden und weist zuverlässige elastische Eigenschaften auf.

### Bezugszeichenliste

- 1: Fußgängerschutzsensor
- 2: Meßschlauch
- 3: Schnittstelle
- 4: Sensorgehäuse
- 5a,b: Sensorkomponenten
- 6: Membraneinrichtung
- 7: Sensorraum
- 8: Sensoreinsatz
- 9: Leiterplatte
- 10: Sensoren
- 11: Deckel
- 12: Sensorgehäuseabschnitt
- 13: Bodenbereich
- 14: Durchgangsöffnung
- 15a,b: Anlageflächen
- 16a,b: Nasenabschnitte
- 17 a, b: Rampenflächen
- 18 a,b: Rastflächen
- 19a,b: Nasenaufnahmen
- 20a,b: Seitenabschnitte
- 21 a, b: Fensterbereich
- 22 a, b: Spannlaschen
- 23: Verbindungsabschnitt
- 24a,b: Gegenrastfläche
- 25a, b: abgekantete Bereiche
- 26: Deckelanordnung

## Patentansprüche

1. Deckelanordnung (26) für eine Sensorkomponente (5a)
mit einem Sensorgehäuseabschnitt (12) und mit einem Deckel (11),
wobei der Sensorgehäuseabschnitt (12) einen Nasenabschnitt (16a,b) aufweist, wobei der Nasenabschnitt (16a,b) eine Rampenfläche (17a,b) aufweist,
wobei der Deckel (11) eine Nasenaufnahme (19a,b) aufweist, wobei der Nasenabschnitt (16a,b) in der Nasenaufnahme (19a,b) angeordnet ist, wobei der Deckel (11) eine Spannlasche (22a,b) aufweist, wobei die Spannlasche (22a,b) den Deckel (11) in einer Demontagerichtung (D) derart vorspannt, dass der Deckel (11) in die Demontagerichtung (D) gedrückt wird, und wobei die Nasenaufnahme (19a,b) an dem Nasenabschnitt (16a,b) in der Demontagerichtung (D) formschlüssig anliegt,
**dadurch gekennzeichnet, dass**
die Spannlasche (22a,b) auf dieser Rampenfläche (17a,b) des Nasenabschnitts (16a,b) aufliegt.

2. Deckelanordnung (26) nach Anspruch 1, **dadurch gekennzeichnet, dass** die Spannlasche (22a,b) in der Nasenaufnahme (19a,b) angeordnet ist.

3. Deckelanordnung (26) nach Anspruch 1 oder 2, **dadurch gekennzeichnet, dass** der Sensorgehäuseabschnitt (12) eine Anlagefläche (15a,b) zur Anlage der Nasenaufnahme (19a,b) in einer Richtung senkrecht zu der Montage- (M) und/oder zu der Demontagerichtung (D) aufweist, wobei der Nasenabschnitt (16a,b) aus der Anlagefläche (15a,b) auskragt.

4. Deckelanordnung (26) nach Anspruch 3, **dadurch gekennzeichnet, dass** die Nasenaufnahme (19a,b) in Richtung der Anlagefläche (15a,b) vorgespannt ist, so dass die Nasenaufnahme (19a,b) gegen die Anlagefläche (15a,b) gepresst ist.

5. Deckelanordnung (26) nach Anspruch 3 oder 4, **dadurch gekennzeichnet, dass** auf dem Nasenabschnitt (16a,b) eine Rastfläche (18a,b) angeordnet ist, und dass auf der Nasenaufnahme (19a,b) eine Gegenrastfläche (24a,b) angeordnet ist, wobei die Rastfläche (18a,b) auf der Gegenrastfläche (24a,b) anliegt, wobei die Rastfläche (18a,b) eine Rampe oder ein Rutsche für die Gegenrastfläche (24a,b) bildet, so dass bei einer Bewegung des Deckels (11) in Demontagerichtung (D) die Nasenaufnahme (19a,b) in Richtung der Anlagefläche (15a,b) geführt wird.

6. Deckelanordnung (26) nach einem der vorhergehenden Ansprüche, **dadurch gekennzeichnet, dass** der Deckel (11) ein Abstandselement aufweist, welches einen mechanischen Endanschlag für den Deckel (11) in dem Sensorgehäuseabschnitt (12) in Montagerichtung (M) bildet.

7. Deckelanordnung (26) nach einem der vorhergehenden Ansprüche, **dadurch gekennzeichnet, dass** der Deckel (11) zwei Seitenabschnitte (20a,b) und einen Verbindungsabschnitt (23) aufweist, wobei die Seitenabschnitte (20a,b) beidseitig an dem Verbindungsabschnitt (23) angeordnet sind und die Nasenaufnahmen (19a,b) bilden.

8. Deckelanordnung (26) nach Anspruch 7, **dadurch gekennzeichnet, dass** das Abstandselement an dem Verbindungsabschnitt (23) ausgebildet ist.

9. Deckelanordnung (26) nach einem der vorhergehenden Ansprüche, **dadurch gekennzeichnet, dass** der Deckel (11) als ein Blechformteil ausgebildet ist.

10. Fußgängerschutzsensor (1) für ein Fahrzeug, **gekennzeichnet durch** eine Deckelanordnung (26) nach einem der vorhergehenden Ansprüche.

11. Fußgängerschutzsensor (1) nach Anspruch 10, **gekennzeichnet durch** eine Membraneinrichtung (6), wobei die Membraneinrichtung in dem Sensorgehäuseabschnitt (12) angeordnet ist und durch den Deckel (11) abgedeckt ist.

## Claims

1. Cover arrangement (26) for a sensor component (5a),
comprising a sensor housing portion (12) and comprising a cover (11),
wherein the sensor housing portion (12) has a lug portion (16a, b), wherein the lug portion (16a, b) has a ramp surface (17a, b),
wherein the cover (11) has a lug receptacle (19a, b), wherein the lug portion (16a, b) is arranged in the lug receptacle (19a, b), wherein the cover (11) has a clamping tab (22a, b), wherein the clamping tab (22a, b) preloads the cover (11) in a disassembly direction (D) in such a way that the cover (11) is pressed in the disassembly direction (D), and wherein the lug receptacle (19a, b) bears in a positively locking manner against the lug portion (16 a, b) in the disassembly direction (D),
**characterized in that**
the clamping tab (22a, b) lies on this ramp surface (17a, b) of the lug portion (16a, b).

2. Cover arrangement (26) according to Claim 1, **characterized in that** the clamping tab (22a, b) is arranged in the lug receptacle (19a, b).

3. Cover arrangement (26) according to Claim 1 or 2, **characterized in that** the sensor housing portion (12) has a supporting surface (15a, b) for supporting the lug receptacle (19a, b) in a direction perpendicular to the assembly direction (M) and/or to the disassembly direction (D), wherein the lug portion (16a, b) projects out of the supporting surface (15a, b).

4. Cover arrangement (26) according to Claim 3, **characterized in that** the lug receptacle (19a, b) is preloaded in the direction of the supporting surface (15a, b), so that the lug receptacle (19a, b) is pressed against the supporting surface (15a, b).

5. Cover arrangement (26) according to Claim 3 or 4, **characterized in that** a latching surface (18a, b) is arranged on the lug portion (16a, b), and **in that** a mating latching surface (24a, b) is arranged on the lug receptacle (19a, b), wherein the latching surface (18a, b) bears on the mating latching surface (24a, b), wherein the latching surface (18a, b) forms a ramp or a slide for the mating latching surface (24a, b), so that the lug receptacle (19a, b) is guided in the direction of the supporting surface (15a, b) when the cover (11) moves in the disassembly direction (D).

6. Cover arrangement (26) according to one of the preceding claims, **characterized in that** the cover (11) has a spacer element which forms a mechanical end stop for the cover (11) in the sensor housing portion (12) in the assembly direction (M).

7. Cover arrangement (26) according to one of the preceding claims, **characterized in that** the cover (11) has two side portions (20a, b) and one connecting portion (23), wherein the side portions (20a, b) are arranged on either side of the connecting portion (23) and form the lug receptacles (19a, b).

8. Cover arrangement (26) according to Claim 7, **characterized in that** the spacer element is formed on the connecting portion (23).

9. Cover arrangement (26) according to one of the preceding claims, **characterized in that** the cover (11) is in the form of a shaped sheet-metal part.

10. Pedestrian protection sensor (1) for a vehicle, **characterized by** a cover arrangement (26) according to one of the preceding claims.

11. Pedestrian protection sensor (1) according to Claim 10, **characterized by** a membrane device (6), wherein the membrane device is arranged in the sensor housing portion (12) and is covered by the cover (11).

## Revendications

1. Ensemble à couvercle (26) pour un composant de capteur (5a),
comprenant une partie de boîtier de capteur (12) et un couvercle (11),
la partie de boîtier de capteur (12) présentant une partie à nez (16a, b), la partie à nez (16a, b) présentant une surface de rampe (17a, b),
le couvercle (11) présentant un logement de nez (19a, b), la partie à nez (16a, b) étant disposée dans le logement de nez (19a, b), le couvercle (11) présentant une bride de serrage (22a, b), la bride de serrage (22a, b) précontraignant le couvercle (11) dans une direction de démontage (D) de telle sorte que le couvercle (11) est poussé dans la direction de démontage (D), et le logement de nez (19a, b) étant adjacent par complémentarité de forme à la partie à nez (16a, b) dans la direction de démontage (D),
**caractérisé en ce que** la bride de serrage (22a, b) repose sur cette surface de rampe (17a, b) de la partie à nez (16a, b).

2. Ensemble à couvercle (26) selon la revendication 1, **caractérisé en ce que** la bride de serrage (22a, b) est disposée dans le logement de nez (19a, b).

3. Ensemble à couvercle (26) selon la revendication 1 ou 2, **caractérisé en ce que** la partie de boîtier de capteur (12) présente une surface d'appui (15a, b) pour l'appui du logement de nez (19a, b) dans une direction perpendiculaire à la direction de montage (M) et/ou de démontage (D), la partie à nez (16a, b) faisant saillie à partir de la surface d'appui (15a, b).

4. Ensemble à couvercle (26) selon la revendication 3, **caractérisé en ce que** le logement de nez (19a, b) est précontraint en direction de la surface d'appui (15a, b) de sorte que le logement de nez (19a, b) est poussé contre la surface d'appui (15a, b).

5. Ensemble à couvercle (26) selon la revendication 3 ou 4, **caractérisé en ce qu'**une surface d'arrêt (18a, b) est disposée sur la partie à nez (16a, b), et **en ce qu'**une surface d'arrêt complémentaire (24a, b) est disposée sur le logement de nez (19a, b), la surface d'arrêt (18a, b) étant adjacente à la surface d'arrêt complémentaire (24a, b), la surface d'arrêt (18a, b) formant une rampe ou une glissière pour la surface d'arrêt complémentaire (24a, b) de sorte qu'en cas de mouvement du couvercle (11) dans la direction de démontage (D) le logement de nez (19a, b) est guidé en direction de la surface d'appui (15a, b).

6. Ensemble à couvercle (26) selon l'une quelconque des revendications précédentes, **caractérisé en ce que** le couvercle (11) présente un élément d'espacement qui forme une butée d'extrémité mécanique pour le couvercle (11) dans la partie de boîtier de capteur (12) dans la direction de montage (M).

7. Ensemble à couvercle (26) selon l'une quelconque des revendications précédentes, **caractérisé en ce que** le couvercle (11) présente deux parties latérales (20a, b) et une partie de liaison (23), les parties latérales (20a, b) étant disposées des deux côtés sur la partie de liaison (23) et formant les logements de nez (19a, b).

8. Ensemble à couvercle (26) selon la revendication 7, **caractérisé en ce que** l'élément d'espacement est réalisé sur la partie de liaison (23).

9. Ensemble à couvercle (26) selon l'une quelconque des revendications précédentes, **caractérisé en ce que** le couvercle (11) est réalisé sous forme de pièce en tôle.

10. Capteur de protection des piétons (1) pour un véhicule, **caractérisé par** un ensemble à couvercle (26) selon l'une quelconque des revendications précédentes.

11. Capteur de protection des piétons (1) selon la revendication 10, **caractérisé par** un dispositif à membrane (6), le dispositif à membrane étant disposé dans la partie de boîtier de capteur (12) et étant recouvert par le couvercle (11).
